# NEUE EUROPÄISCHE PATENTSCHRIFT

(11) **EP 1 811 211 B2**
(45) Veröffentlichungstag und Bekanntmachung des Hinweises auf die Entscheidung über den Einspruch: **25.06.2014**
(45) Hinweis auf die Patenterteilung: 27.04.2011
(21) Anmeldenummer: 07000767.9
(22) Anmeldetag: 16.01.2007
(51) Int. Cl.: F16K 1/22, F16K 1/226

(54) **Armatur zum Absperren oder Regeln eines Mediums**
Valve for the cut-off or regulation of a fluide
Vanne pour l'arrêt ou la régulation d'un fluide

(30) Priorität: 21.01.2006 DE 102006002936
(43) Veröffentlichungstag der Anmeldung: 25.07.2007
(73) Patentinhaber: Erhard GmbH & Co. KG, 89522 Heidenheim (DE)
(72) Erfinder: Kuck, Matthias, 73540 Heubach (DE); Lindel, Manhardt, VERSTORBEN (DE); Schiller, Wolfgang, 89555 Steinheim (DE)
(74) Vertreter: Dr. Weitzel & Partner

(56) Entgegenhaltungen:
- EP-A- 0 498 536
- EP-A- 1 174 648
- EP-A1- 1 574 763
- DE-U1- 9 217 314
- DE-U1-202004 007 145
- JP-A- 60 001 475
- JP-A- 2001 221 346
- DATENBLATT EINER ABSPERRKLAPPE- "EPOXID-AUSFÜHRUNG'
- DATENBLATT EINER ABSPERRKLAPPE-"EMAIL-AUSFÜHRUNG'
- Produktinformation zu einer VAG EKN Absperrklappe
- Ersatzteilliste einer VAG EKN 188 Absperrklappe
- 'Qualitätssicherung für den Erfolg im Wettbewerb' BÄNDER.BLECHE, ROHRE, 01 Juli 2006,
- 'Kundeninformation' HAWLE ARMATUREN AG Nr. 8, 01 September 2004,
- Auftragsbestätigungen, Lieferscheine und Rechnungen zu den Lieferungen an der Firma Tröger & Entenmann Hydromaten KG GmbH & Co
- Schnittdarstellung durch den zusammengebauten Hydromat DN 250 PN 10
- Schnittdarstellung durch das Gehäuse dieser Hydromat
- Schnittdarstellung durch die Klappe dieser Hydromat
- CAD Schnittdarstellung durch den zusammengebauten Hydromat DN 300 PN 10
- Schnittdarstellung durch das Gehäuse dieser Hydromat
- Schnittdarstellung durch die Klappe dieser Hydromat
- CAD Schnittdarstellung durch den zusammengebauten Hydromat DN 350 PN 16
- Schnittdarstellung durch das Gehäuse dieser Hydromat
- Schnittdarstellung durch die Klappe dieser Hydromat
- Fotografien einer zerlegten im Jahre 2005 hergestellten Absperrklappe Zur des Typs Hydromat DN 350 PN 16

## Beschreibung

Die Erfindung betrifft eine Armatur zum Absperren oder Regeln eines Mediums, vor allem von Wasser, aber auch von anderen flüssigen oder gasförmigen Medien. Eine solche Armatur ist beispielsweise bekannt geworden aus EP 0 756 115 B1, EP-A-0 498 315, DE-A-2 605 189 oder US-A-2 847 181.

Armaturen der genannten Art werden vor allem im Bereich der Wasser-, Abwasser- und Gasversorgung sowie im Stahlwasserbau eingesetzt. Sie sind in vielen Fällen in erdverlegten Rohrleitungen eingebaut. Die Anforderungen an die Zuverlässigkeit sind hoch, insbesondere bei Medien wie Gas, aber auch bei Wasser, wobei die Verfügbarkeit der Versorgung gewährleistet werden muss, Die Armatur muss somit derart konstruiert sein, dass sie zuverlässig im Betrieb ist, dass aber auch alle Vorkehrungen gegen Störeinflüsse wie Korrosion, Verschmutzung und so weiter gegeben ist. Der Absperrkörper, der Bestandteil einer solchen Armatur ist, ist im Gehäuse schwenkbar oder linear verschiebbar gelagert zwischen einer Offenstellung und einer Schließstellung. Das Verstellen zwischen diesen beiden Stellungen muss auch nach langer Zeitdauer noch einwandfrei möglich sein.

Armaturen der genannten Art sind Massenartikel, die einem harten Wettbewerb ausgesetzt sind, insbesondere durch Importe aus Niedriglohnländern. Deswegen ist die Konstruktion so zu gestatten, dass Herstellung und Montage besonders kostengünstig bei sicherer Funktionsfähigkeit sind.

Gerade die beiden letztgenannten Erfordernisse werden bei den bisher bekannten Armaturen nicht in vollem Maße erfüllt.

Ebenso weisen die sonst üblichen Verbindungen im Armaturenbau die Nachteile auf, dass sie einen starken Verschleiß der Verbindungselemente und eine Schwächung des Torsionswiderstandes der Welle durch die Kerbwirkung der eingefrästen Nut sowie konstruktive Nachteile durch ungünstige Dimensionierung der Welle haben.

EP-A1-1 574 763 offenbart eine Armatur zum Absperren eines Mediums, umfassend ein Gehäuse, einen darin gelagerten Absperrkörper und eine Antriebswelle, die im Gehäuse gelagert ist und mit einer Nabe des Absperrkörpers in Triebverbindung steht. Zwischen Nabe und Gehäuse ist eine Hülse vorgesehen, die die Antriebswelle gegen das Medium abschirmt und zugleich eine Lagerbuchse für die Antriebswelle im Gehäuse ist. Ferner sind Dichtungen vorgesehen, um die Spalte innerhalb und außerhalb der Antriebswelle abzudichten.

DE 92 17 314 U1 beschreibt ebenfalls eine in einem Gehäuse gelagerte Absperrklappe. Diese ist drehbar gelagert. Zum Übertragen von Drehmoment von einer Antriebswelle auf die Nabe des Absperrkörpers ist eine Steckverbindung mit polygonem Querschnitt vorgesehen.

DE 20 2004 007 145 U1 beschreibt eine Absperrklappe mit einer Oberflächen beschichtung.

Der Erfindung liegt die Aufgabe zugrunde, eine Armatur der eingangs genannten Arten derart zu gestalten, dass sie sich kostengünstig herstellen lässt, und dass die Zuverlässigkeit ihres Betriebes über lange Zeiträume hinweg gegeben ist.

Diese Aufgabe wird durch die Merkmale von Anspruch 1 gelöst.

Hierdurch wird folgendes erreicht: Bei Anwendung einer Polygon-Steckverbindung mit gerundeten Eckbereichen lässt sich die Antriebswelle mit ihrem freien Ende leicht in das Sackloch der Aufnahmeöffnung in der Nabe des Absperrkörpers einführen, jedenfalls viel leichter, als dies bei bekannten Verbindungen zwischen Antriebswelle und Nabe des Absperrkörpers möglich ist. Dies gilt insbesondere für die bekannten Ausführungen, bei welchen die Wellen-Nabenverbindung eine Stift-, Keil-. Passfeder- oder Vielkeilwellenverbindung ist. Auch ist die polygone Steckverbindung mit gerundeten Eckbereichen viel kostengünstiger. Sie lässt sich mit modernen CNC-Maschinen kostengünstig herstellen. Auch entfallen jegliche weiteren Teile zum Herstellen einer drehfesten Verbindung, beispielsweise eine Passfeder oder ein Keil, die in eine entsprechende Längsnut der Antriebswelle eingelegt, und in eine Längsnut in der Nabe des Absperrkörpers eingeführt werden muss. Gleiches gilt für einen Stift gemäß dem Stande der Technik, der in eine Bohrung in der Nabe des Absperrkörpers und in eine damit fluchtende Bohrung in der Antriebswelle eingesetzt werden muss. Es wird somit durch die Erfindung ein Bauteil vollständig eingespart.

Durch die Gestaltung der Aufnahmeöffnung der Nabe als beispielsweise Sackloch ist der Endbereich der Antriebswelle von der Nabe umhüllt und kommt somit mit Medium nicht in Berührung. Durch die Hülse, die sich zwischen Nabe und Gehäuse erstreckt und die die Antriebswelle umgibt, ist auch der übrige Teil der Antriebswelle gegen Berührung mit Medium geschützt. Es dringt somit kein Medium in den Ringspalt zwischen Antriebswelle und Gehäuse ein.

Bei der polygonen Steckverbindung liegen die miteinander zusammenarbeitenden Flächen bei der Drehmomentübertragung satt aneinander an, so dass sich ein einwandfreies Tragbild ergibt.

Gemäß der Erfindung ist der polygonförmige Zapfen - in einem Axialschnitt gesehen - ballig ausgebildet. Dies hat einen besonderen Vorteil. Zwischen dem Zapfen und der ihn aufnehmenden Bohrung herrscht völlige Spielfreiheit. Dies ist für ein präzises Arbeiten der Armatur außerordentlich wichtig. Trotz des Null-Spiels der Verbindung zwischen Zapfen und Bohrung ist leichtes Montieren und Demontieren möglich. Dabei genügt auch eine ganz minimale Balligkeit, um den genannten Effekt zu erzielen.

Das Polygon kann ein Normpolygon sein. Handelt es sich beispielsweise um ein Polygon mit drei Seitenflächen, so können die Seitenflächen von identischer Gestalt sein, nach Art eines gleichseitigen Dreieckes. Es ist aber auch möglich, ein unregelmäßiges Polygon vorzusehen, beispielsweise nach Art eines gleichschenkligen Dreiecks.

Die Erfindung ist anhand der Zeichnung näher erläutert. Darin ist im einzelnen folgendes dargestellt:
- Figur 1: zeigt das Gehäuse einer Armatur in einem Axialschnitt.
- Figur 2: zeigt den Gegenstand gemäß Figur 1 mit Einbauten in einem achssenkrechten Schnitt gemäß einer ersten Ausführungsform der Steckverbindung.
- Figur 3: zeigt den Gegenstand von Figur 1, wiederum geschnitten, um 90 Grad gegenüber Figur 1 verdreht.
- Figur 4: zeigt Nabe und Antriebswelle einer Steckverbindung in schematischer Darstellung, gegenüber den Figuren 1 bis 3 vergrößert.
- Figur 5: zeigt die Antriebswelle in einer Draufsicht auf deren polygonförmigen Querschnitt.
- Figur 6: zeigt in schematischer Darstellung eine zweite Ausführungsform einer Steckverbindung in einem Axialschnitt.
- Figur 7: zeigt in schematischer Darstellung eine dritte Ausführungsform einer Steckverbindung in einem Axialschnitt.
- Figur 8: zeigt in einer Darstellung analog der Figuren 6 und 7, jedoch vergrößert, die Beschichtungen der Nabe sowie des Gehäuses.

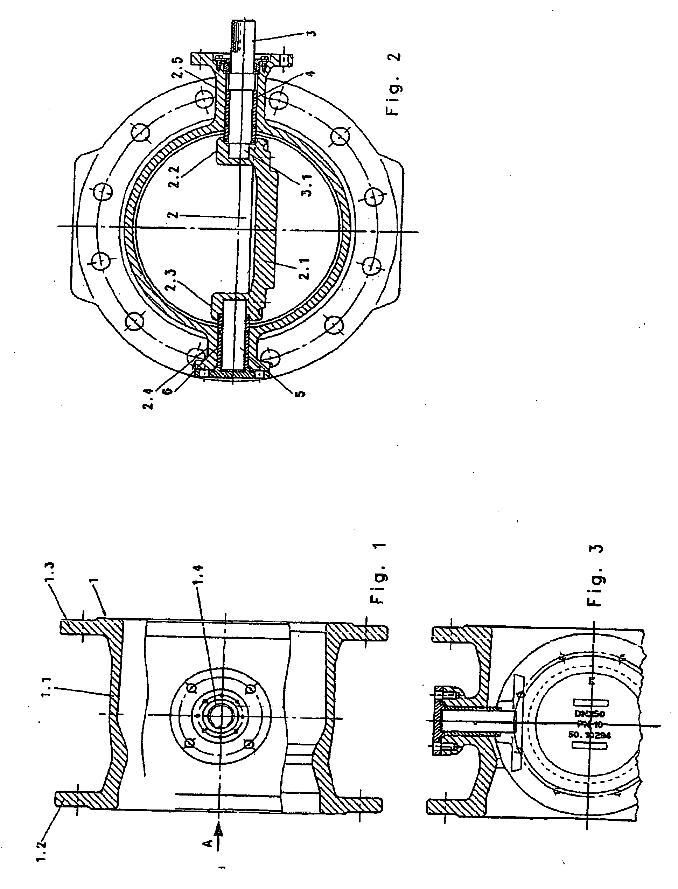

Das in Figur 1 gezeigte Gehäuse 1 weist einen im wesentlichen zylindrischen Teil 1.1 sowie zwei Flansche 1.2 und 1.3 auf, Eine Bohrung 1.4 dient dem Hindurchführen einer Antriebswelle.

Figur 2 zeigt den Absperrkörper 2 einer Armatur in Offenstellung. Der Absperrkörper 2 umfasst eine kreisförmige Klappenscheibe 2.1 sowie zwei einander gegenüberliegende Naben 2.2, 2.3. Eine Antriebswelle 3 ist durch einen Lagerstutzen 2.5 des Gehäuses hindurchgeführt. Die Antriebswelle 3 weist ein freies Ende 3.1 auf. Dieses ist in ein Sackloch der Nabe 2.2 eingeführt - siehe die untenstehende Erläuterung.

Die Antriebswelle 3 ist von einer Lagerbuchse 4 umgeben. Wie man sieht, ist die Lagerbuchse 4 über die Bohrung 1.1 hinaus zum Absperrkörper 2 hin verlängert und dort in eine ringförmige Aussparung der Nabe 2.2 eingeführt,

In Figur 2 links sieht man einen frei drehbaren Lagerzapfen 5. Dieser ist von einer Lagerbuchse 6 umschlossen, die ihrerseits wiederum von einem Lagerstutzen 2.4 des Gehäuses umschlossen ist.

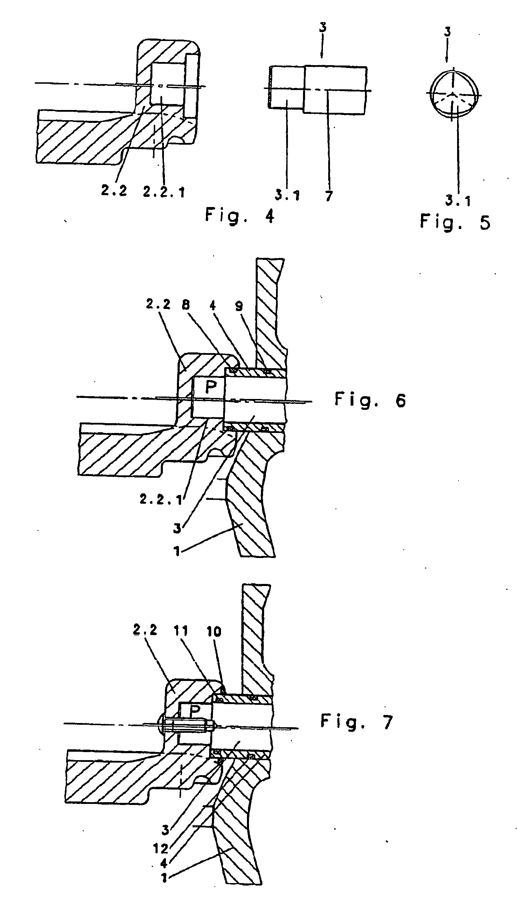

Die Figuren 3 und 4 lassen die Gestaltung der an der Steckverbindung beteiligten Bauteile genauer erkennen. Man sieht wiederum die Nabe 2.2 sowie die Antriebswelle 3 mit ihrem freien Ende 3.1. Das freie Ende 3.1 der Antriebswelle 3 ist in eine Bohrung 2.2.1 der Nabe 2.2 einführbar, um die genannte Steckverbindung zu bilden. Figur 5 zeigt, dass das freie Ende 3.1 der Antriebswelle 3 in Draufsicht und damit auch im Querschnitt polygonförmig ist. Sie lässt sich in die ebenfalls polygonförmige Bohrung 2.2,1 einschieben. Damit kann sie auf die Nabe 2.2 und damit auch auf den gesamten Absperrkörper 2 ein Drehmoment übertragen, so dass diese um eine Drehachse 7 verschwenkbar ist.

Unter der Ausdrucksweise "Polygon" ist im Sinne der Erfindung grundsätzlich jeder Querschnitt zu verstehen, der von der Form her einer allgemeinen Trochoide und deren Sonderformen entspricht.

Die Steckverbindung ist eine drehfeste Verbindung, die ein Übertragen von Drehmoment von der Antriebswelle 3 auf die Nabe 2.2 und damit auch auf den gesamten Absperrkörper 2 ermöglicht. Es kann wünschenswert sein, eine Sicherung der Antriebswelle 3 gegen Axialverschiebung vorzusehen. Dies könnte verwirklich werden beispielsweise durch einen Umfangsbund in Antriebswelle 3 sowie durch eine in das Gehäuse eingebrachte Umfangsnut (nicht dargestellt), in die der Umfangsbund eingreift.

Entscheidend ist, dass die Steckverbindung erzeugt wird allein durch die polygonförmige Gestaltung der beteiligten Teile, somit der Bohrung 2.2.1 in der Nabe 2.2, und durch das freie Ende 3.1 der Antriebswelle 3.

Die in Figur 6 gezeigte zweite Ausführungsform der erfindungsgemäßen Steckverbindung lässt folgendes erkennen:

Die Antriebswelle 3 hat einen durchgehend gleich großen Durchmesser. Die Lagerbuchse 4 umschließt wiederum die Antriebswelle 3, erstreckt sich aber über die gesamte Antriebswelle 3 in der Darstellung gesehen nach links bis zum Ende oder fast bis zum Ende der Antriebswelle 3. Demgemäß befinden sich Antriebswelle 3 mit Lagerbuchse 4 in der Bohrung 2.2.1 der Nabe 2.2.

Man erkennt Dichtungen 8 und 9. Beide sind in Nuten der Lagerbuchse 4 eingelassen, und zwar derart, dass sie eine Abdichtung zwischen der Lagerbuchse 4 und der Nabe 2.2 beziehungsweise dem Gehäuse 1 herstellen.

Bei der Ausführungsform gemäß Figur 7 liegen die Verhältnisse ähnlich. Jedoch sind hier drei Dichtungen vorgesehen: Eine Dichtung 10 zwischen der Nabe 2.2 und der Lagerbuchse 4, eine Dichtung 11 zwischen der Antriebswelle 3 und der Lagerbuchse 4, und eine Dichtung 12 zwischen der Lagerbuchse 4 und dem Gehäuse 1.

Statt der Lagerbuchse 4 als Mittel zum Abschirmen der Antriebswelle 3 gegen das Medium - oder zusätzlich zu dieser - kann auch eine Manschette vorgesehen werden. Diese ist am Gehäuse 1 mediumdicht und fest mit ihrem einen Ende angeschlossen. Mit ihrem anderen Ende ist sie ebenfalls fest angeschlossen an die Nabe 2.2. Sie besteht aus elastischem Material, beispielsweise aus Gummi. Wird die Absperrklappe 2 verdreht, so wird das Material dieser Manschette entsprechend verformt, was aufgrund von dessen Elastizität leicht möglich ist.

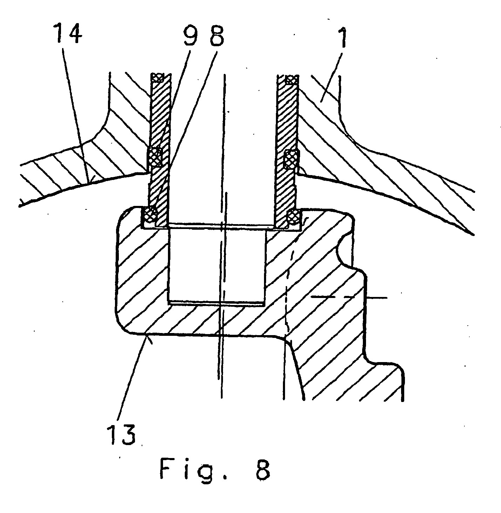

Bei den vorstehend beschriebenen Ausführungsformen sind die Nabe und das Gehäuse mit einer Beschichtung versehen. Diese ist in Figur 8 erkennbar.

Wie man hieraus sieht, ist die Nabe 2.2 von einer Beschichtung 13 völlig eingehüllt, bis auf die Leibung der polygonförmigen Sackbohrung, die hiervon frei ist.

Das Gehäuse 1 weist ebenfalls eine Beschichtung 14 auf. Diese bildet jene Fläche des Gehäuses, die dem Medium zugewandt ist. Die Beschichtung erstreckt sich aber auch über einen Teil der Lagerbuchse 4 hinweg.

In beiden Fällen liegen die Dichtungen 8, 9 an der Beschichtung 13 beziehungsweise 14 an. Das Gehäuse 1 kann an jener Stelle, an welcher sich die Dichtung 9 befindet, eine Ausdrehung aufweisen. Die Ausdrehung kann beispielsweise eine radiale Erstreckung von 1 mm haben. Die Beschichtung 14 füllt die Ausdrehung aus.

Dieses System ist neu und hat außerordentlich vorteilhafte Wirkungen:

Zum einen ist der Verschleiß der Dichtung extrem gering, falls überhaupt vorhanden. Dies geht auf die hohe Glätte zurück, die das Dichtungsmaterial aufweist. Zum anderen ist die Dichtwirkung perfekt. Ein Eindringen von Wasser in den betreffenden Spalt wird positiv verhindert. Im einen Falle ist dies der Spalt zwischen der Hülse 4 und der Nabe 2.2, und im anderen Falle ist es der Spalt zwischen der Hülse 4 und der Gehäusebohrung.

Als Dichtmaterial kommen Emaille, Naturkautschuk, Epoxyd oder andere Materialen in Betracht.

### Bezugszeichenliste

- 1.: Gehäuse
- 1.1: zylindrischer Teil des Gehäuses
- 1.2: Flansch
- 1.3: Flansch
- 1.4: Bohrung
- 2: Absperrkörper
- 2.1: Klappenscheibe
- 2.2: Nabe
- 2.2.1: Polygonbohrung
- 2.3: Nabe
- 2.4: Lagerstutzen
- 2.5: Lagerstutzen
- 3: Antriebswelle
- 3.1: freies Ende der Antriebswelle
- 4: Lagerbuchse / Hülse
- 5: Lagerbuchse (fehlt in der Figur 6)
- 6: Lagerbuchse
- 7: Drehachse
- 8: Dichtung
- 9: Dichtung
- 10: Dichtung
- 11: Dichtung
- 12: Dichtung
- 13: Beschichtung
- 14: Beschichtung

## Patentansprüche

1. Armatur zum Absperren oder Regeln eines Mediums mit einem Gehäuse (1);
mit einem in einer Gehäusebohrung gelagerten Absperrkörper (2), der um eine quer zur Strömungsrichtung des Mediums verlaufende Schwenkachse (7) drehbar gelagert ist;
mit einer Antriebswelle (3), die im Gehäuse (1) gelagert ist und mit einer Nabe (2.2) des Absperrkörpers (2) in Triebverbindung steht;
die Verbindung zwischen Antriebswelle (3) und Nabe (2.2) ist eine Steckverbindung mit polygonem Querschnitt;
der polygone Querschnitt hat gerundete Eckbereiche;
die Nabe (2.2) weist eine Öffnung zur Aufnahme der Antriebswelle (3) in Gestalt einer polygonförmigen Sackbohrung (2.2.1) auf;
die Steckverbindung mit polygonem Querschnitt ist das einzige Mittel zum Übertragen von Drehmoment von der Antriebswelle (3) zur Nabe (2.2); zwischen der Nabe (2.2) und dem Gehäuse (1) ist eine Hülse (4) vorgesehen, die die Antriebswelle (3) gegen das Medium abschirmt;
die Hülse (4) ist gleichzeitig eine Lagerbüchse zum Lagern der Antriebswelle (3) im Gehäuse (1);
zum Abdichten des Spaltes zwischen der Hülse (4) und der Sackbohrung (2.2.1) der Antriebswelle (3) sowie des Spaltes zwischen der Hülse (4) und der Gehäusebohrung ist jeweils eine Dichtung (8,9,10, 11, 12) vorgesehen;
wenigstens im Bereich der Dichtungen (8,9,10,11, 12) sind die Oberflächen der Nabe (2.2) und des Gehäuses (1) mit einer Beschichtung versehen,
wobei der polygonförmige Zapfen - in einem Axialschnitt gesehen - ballig ausgebildet ist.

## Claims

1. An armature for blocking or regulating a fluid with a housing (1);
fitted with a blocking body (2) mounted in a housing bore, which is rotatably mounted around a pivot axis (7) extending perpendicular to the flow direction of the medium;
with a drive shaft (3), which is mounted in the housing (1) and is connected to and actuated by a hub (2.2) of the blocking body (2);
the connection between drive shaft (3) and hub (2.2) is a plug connection with polygonal cross-section;
the polygonal cross-section has rounded corner regions;
the hub (2.2) presents an opening for receiving the drive shaft (3) in the form of a polygonal blind hole (2.2.1);
the plug connection with polygonal cross-section is the single means for transmitting a torque from the drive shaft (3) to the hub (2.2);
a sleeve (4) is provided between the hub (2.2) and the housing (1) for protecting the drive shaft (3) against the fluid;
the sleeve (4) is simultaneously a bushing for receiving the drive shaft (3) in the housing (1);
a seal (8, 9, 10, 11, 12) is always provided for filling the gap between the sleeve (4) and the blind hole (2.2.1) of the drive shaft (3) as well as the gap between the sleeve (4) and the housing bore;
the surfaces of the hub (2.2) and of the housing (1) are provided with a coating at least in the region of the seals (8, 9, 10, 11, 12);
whereby the polygonal journal is ball-shaped as seen in an axial cross-section.

## Revendications

1. Armature de blocage ou de régulation d'un fluide disposant d'un logement (1);
d'un corps de blocage (2) situé dans un alésage de logement, qui est monté rotatif autour d'un essieu pivotant (7) s'étendant perpendiculairement au sens d'écoulement du fluide;
d'un arbre d'entraînement (3), qui repose dans le logement (1) et assure une liaison motrice avec un moyeu (2.2) du corps de blocage (2);
la connexion entre l'arbre d'entraînement (3) et le moyeu (2.2) est une connexion à fiche de section transversale polygonale;
la section transversale polygonale possède des zones angulaires arrondies;
le moyeu (2.2) présente une ouverture destinée à recevoir l'arbre d'entraînement (3) en forme de trou aveugle polygonal (2.2.1);
la connexion à fiche de section transversale polygonale est le seul moyen permettant de transmettre le couple de rotation de l'arbre d'entraînement (3) au moyeu (2.2);
une douille (4) est prévue entre le moyeu (2.2) et le logement (1), pour protéger l'arbre d'entraînement (3) contre le fluide;
la douille (4) est simultanément un coussinet permettant de recevoir l'arbre d'entraînement (3) dans le logement (1);
un joint (8, 9,10,11,12) est systématiquement prévu pour étanchéifier l'espace entre la douille (4) et le trou aveugle (2.2.1) de l'arbre d'entraînement (3) de même que l'espace entre la douille (4) et l'alésage de logement;
les surfaces du moyeu (2.2) et du logement (1) sont pourvues d'une enduction au moins dans la zone des joints (8, 9, 10, 11, 12);
le tenon polygonal vue en coupe axiale étant en forme de balle.
